# EUROPEAN PATENT APPLICATION

(11) **EP 4 741 045 A1**
(43) Date of publication of application: **13.05.2026**
(21) Application number: 24211130.0
(22) Date of filing: 06.11.2024
(51) Int. Cl.: B01D 63/10

(54) **A METHOD OF PRODUCING A SPIRALLY WOUND FILTRATION MODULE AND A SPIRALLY WOUND FILTRATION MODULE**

(71) Applicant: Alfa Laval Corporate AB, 221 00 Lund (SE)
(72) Inventor: LARSEN, Henrik, DK-4700 NÆSTVED (DK)
(74) Representative: Alfa Laval Attorneys

(57) **Abstract**

The present invention relates to a method of producing a spirally wound filtration module for filtrating a fluid feed into a retentate portion and a permeate portion. The method comprises the step of stacking membrane filtration assemblies and permeate transfer layers on top of each other where each membrane filtration assembly being located between two permeate transfer layers starting with a first permeate transfer layer and ending with a final permeate transfer layer. The leading edges of the membrane filtration assemblies are facing the permeate tube and being sequentially offset. The final permeate transfer layer covers all the leading edges of the membrane filtration assemblies. The method comprises the step of rolling the membrane filtration assemblies and the permeate transfer layers around the permeate tube forming the filtration module.

## Description

The present invention relates to a method of producing a spirally wound filtration module and a spirally wound filtration module.

### Introduction

Sanitary filtration plants using spiral wound filtration modules can be used for reverse osmosis, nanofiltration, ultrafiltration and microfiltration to efficiently recover, purify, fractionate or concentrate products in industries such as food, beverage, dairy, biotech/biobased chemicals and pharma.

Sanitary filtration plants of the above type are known to use filtration modules comprising membrane filtration assemblies spirally wound on permeate tubes. In a typical filtration plant the filtration modules will be disposed within the non-permeable filter housing of the sanitary filtration plant. Pumps will be used to pump a fluid feed through the filter module which is disposed in the housing.

The fluid feed enters at one end of the filter housing and travels through the filtration module via wound feed transfer layers positioned parallel to and between wound membrane layers of the membrane filtration assemblies. Separation occurs at the membrane-fluid interface, in with part of the fluid, called the permeate, passes through the membrane layer while the rest of the fluid feed, called the retentate, remains in feed transfer layers on the opposite side of the membrane and becomes a more concentrated feed. The permeate stream travels in permeate transfer layers sandwiched between the membrane filtration assemblies in an inwardly spiralling radial direction until it passes through the perforations of the permeate tube for recovery from one or both ends of the permeate tube.

The following documents can be considered representative prior art in the present context:
US 2013/0161258 A1 relates to a brine seal for a spiral wound membrane element. The brine seal has an elongate body with a flexible wing. The brine seal is wrapped around the spiral membrane element with a space between each turn of the brine seal.

JP 2011/092905A relates to a membrane with protrusions.

US 8668828 relates to spiral wound membrane cartridge having a thin tubular shell having a textured exterior surface to allow controlled bypass flow of liquid feed between a pressure vessel interior and a textured exterior surface of the shell.

US 5985146 relates to a fluid separation device having a rigid, nonporous shell and a spiral wound membrane filtration element positioned inside the rigid, nonporous shell. A threaded groove running around the circumference and down the length of the exterior surface of the shell.

US 4064052 relates to a spirally wound membrane having a lip seal between the module and the containment tube.

US 2009/0200237 A1 relates to a filter media having a flow control strip circumferentially surrounding the media at one end. The strip preferably is an open mesh material that cooperates with an overlapping portion of an open mesh net that surrounds the filter media. The strip creates a compressible area that restricts bypass flow while allowing for easy installation and removal of the membrane module.

US 4839037 relates to a spirally wound filter cartridge including a centrally disposed tube and a sheet of filtration material spirally wound around the tube.

US 5128037 relates to a spiral wound filtration cartridge having an end plate for controlling fluid flow within the space between the outer cylinder and the housing.

US 4902417 relates to a spiral wound membrane cartridge having a feed layer having a plurality of parallel ribs.

US 4548714 relates to a membrane cartridge for insertion into a pressure resistant container. The cartridge has a porous grid material having an extension which is of sufficient length to encompass the circumference of the cartridge when the cartridge is positioned inside the container.

US 5073263 relates to an ultrafiltration module comprising a permeate collector tube, one or more membrane leaves wound around the tube, an outer wrap screen circumscribing the wound leaves and a bypass screen also of open mesh configuration is wrapped around the outer wrap.

US 3063888 relates to a filter tube having a strip of foraminous material.

US 5460720 relates to a fluid separation device, utilizing tubular or flat sheet membrane materials, bounded on the membrane side of the sheet by a sheet of a porous feed spacer material.

WO 2022/187472 A1 relates to a by-pass control sleeve has circumferential protrusions along its outer surface.

The rolling technique is a crucial process in the production of spirally wound filtration modules. Correct rolling ensures the efficient and compact arrangement of membrane filtration assemblies and permeate transfer layers around a central permeate tube, optimizing the filtration performance and structural integrity of the module. For ensuring the highest possible quality, the stacking of the layers and the rolling of the spirally wound filtration modules typically involves manual labour to ensure high quality of the final product.

The process begins with the preparation of a permeate tube, which is perforated to allow the passage of permeate. Membrane filtration assemblies are then prepared, each consisting of a first membrane layer, a feed transfer layer, and a second membrane layer stacked on top of each other such that the feed transfer layer is sandwiched between the first membrane layer and the second membrane layer. These assemblies are stacked alternately with permeate transfer layers, ensuring that each membrane filtration assembly is sandwiched between two permeate transfer layers. The stacking typically is performed on a table or similar stable surface.

The key to the rolling technique lies in the precise arrangement and sequential offsetting of the leading edges of the membrane filtration assemblies along a direction perpendicular to the permeate tube, such that when wound up, the leading edges of the membrane filtration assemblies are distributed around the circumference of the permeate tube. This configuration allows for an even distribution of the filtration assemblies and maximizes the surface area available for filtration.

Once the stacking is complete, the entire assembly is wound around the permeate tube in a spiral manner. The rolling is performed by rotating the permeate tube around its own axis until the complete stack of layers are wound up forming the spirally wound filtration module. This rolling process not only compacts the filtration assemblies and the permeate transfer layers into a manageable size but also enhances the module's ability to withstand high pressures and flow rates during operation.

During the first part of the rolling, it is critical that the leading edges of the membrane filtration assemblies are correctly aligned with the permeate tube and that the sequential offset of the leading edges of the membrane filtration assemblies along the direction perpendicular to the permeate tube is maintained. If the leading edges of the membrane filtration assemblies are dislocated, the filtration assemblies will not be evenly distributed around the permeate tube and there will be a reduced efficiency, durability and even risk of malfunction of the membrane filtration assemblies. Therefore, the leading edges of the membrane filtration assemblies must be guided at the location where the leading edges of the membrane filtration assemblies meet the permeate tube. This guiding is typically made by applying hand pressure and guiding at the location where the leading edges of the membrane filtration assemblies meet the rolled up layers on the permeate tube during the roll up process.

By employing this rolling technique, manufacturers can produce highly efficient and durable filtration modules that are essential for various industrial and environmental applications. However, as can be easily understood, using hands at the location where the leading edges of the membrane filtration assemblies meet the layers rolled up on the permeate tube during the roll up process puts the hands in danger of being squeezed between the layers already rolled up on the permeate tube and the stack on the table about to be rolled up.

It is therefore an object of the present invention to provide technologies for avoiding the use of hands adjacent to the location where the leading edges of the membrane filtration assemblies meet the rolled up layers on the permeate tube during the roll up process.

### Summary of the invention

The above object is realized according to a first aspect of the present invention by a method of producing a spirally wound filtration module for filtrating a fluid feed into a retentate portion and a permeate portion, the method comprising the steps of:
providing a permeate tube extending in a first direction between a first end and a second end, the permeate tube defining a plurality of perforations,
providing a first set of membrane filtration assemblies, each membrane filtration assembly defining a leading edge each and comprising: a first membrane layer, a feed transfer layer and a second membrane layer stacked on top of each other,
providing a second set of permeate transfer layers,
stacking the membrane filtration assemblies and the permeate transfer layers on top of each other, each membrane filtration assembly being located between two permeate transfer layers starting with a first permeate transfer layer and ending with a final permeate transfer layer, the first permeate transfer layer being in contact with the permeate tube between the first end and the second end and extends away from the permeate tube in a second direction being perpendicular to the first direction, the leading edges of the membrane filtration assemblies facing the permeate tube and being sequentially offset along the second direction, the final permeate transfer layer covering all the leading edges of the membrane filtration assemblies, and
rolling the membrane filtration assemblies and the permeate transfer layers around the permeate tube forming the filtration module.

The first end and the second end of the permeate tube typically form circular apertures for removing permeate from the permeate tube. The permeate tube has an outer wall extending from the first end to the second end along the first direction. The wall is provided with perforations for the permeate.

The permeate transfer layers and the feed transfer layers provide the structural support for the membrane. They can be made of polypropylene or polyester support material forming net structures or grid structures which are sufficiently rigid to form flow channels within the filtration module but flexible enough to be rolled up. This allows liquids, such as the permeate and the feed, to flow freely through the permeate transfer layers and the feed transfer layers.

The membrane layers are permeable for the permeate but not for the remaining part of the feed. They can be made of polymeric materials like polysulfone or fluoropolymer or thin film composite membranes cast on polyester support to be used in nanofiltration (NF) applications.

The layers extend in the second direction perpendicular to the first direction. The length of the layers in the second direction can vary depending on the application and a longer length of the layers on the second direction allow more turns of the layers around the permeate tube.

By stacking the membrane filtration assemblies and the permeate transfer layers such that the first and final layers in the stack are permeate transfer layers, the membrane filtration assemblies will be positioned between the first and final permeate transfer layers. Due to the rigidity of the permeate transfer layers, when the membrane filtration elements and the permeate transfer layers are rolled around the permeate tube, there will be a compression force on the membrane filtration elements resulting from the pressure applied by the final permeate transfer layers onto the first permeable transfer layer. As the final permeable transfer layer covers all of the leading edges of the membrane filtration assemblies, it will be rolled up before the first and lowermost membrane filtration element. The final permeate transfer layer will thus pinch the first and lowermost membrane filtration element as it approaches the rolled-up part of the filtration module. The offset edges of the subsequent membrane filtration assemblies will follow in sequence and be squeezed by the final permeate transfer layer just before being rolled up. The pinching pressure applied will be sufficient for guiding the membrane filtration assemblies and locking them in place. There is thus no need for any additional hand pressure for guiding when rolling up the filtration module.

According to a further embodiment of the first aspect, the first membrane layer and the second membrane layer constitute a single sheet folded about the feed transfer layer at the leading edge. In this way the leading edge of the membrane filtration assembly will be well defined and there if no need to glue the layers of the membrane filtration assemblies.

According to a further embodiment of the first aspect, the total sequential offset between the leading edges of the membrane filtration assemblies along the second direction substantially correspond to the circumference of the permeate tube. In this way all of the leading edges of the membrane filtration assemblies will be distributed around the circumference of the permeate tube thereby maximizing the useful area of the permeate tube.

According to a further embodiment of the first aspect, the first set is between 4-50 membrane filtration assemblies, preferably between 6-20 membrane filtration assemblies.

The total number of membrane filtration assemblies depend on the sizes and materials of the permeate tube and the feed and permeate to be used and can be optimized for maximizing the efficiency and the use of materials.

According to a further embodiment of the first aspect, the number of permeate transfer layers are one more than the number of membrane filtration assemblies. As both the first layer final layer is a permeate transfer layer and the membrane filtration assemblies are sandwiched between the permeate transfer layers, the number of permeate transfer layers are typically one more than the number of membrane filtration assemblies.

According to a further embodiment of the first aspect, the filtration modules is wrapped by a grid material. The grid material prevents the filtration modules from unwinding and makes it easier to handle.

According to a further embodiment of the first aspect, the permeate transfer layers and the feed transfer layers are in the form of nets or meshes. A net- or mesh structure provides the necessary mechanical strength while allowing the membrane to maintain its flexibility and permeability.

According to a further embodiment of the first aspect, the permeate transfer layers being glued to the adjacent membrane layers. Typically, glue is applied to each of the permeate transfer layers during stacking. The glue seeps through the permeate transfer layers and fixates each permeate transfer layer to the adjacent membrane layers.

According to a further embodiment of the first aspect, wherein the permeate transfer layers being glued to the adjacent membrane layers along all edges except the leading edge. By glueing the permeate transfer layers the adjacent membrane layers along all edges except the leading edge, the permeate transfer layer can be kept in fluid communication with the permeate tube only and kept separated from the exterior of the filtration module.

According to a further embodiment of the first aspect, a weight is placed on the final permeate transfer layer during rolling. To increase the pressure on the final permeate transfer layer and thereby improve the guiding of the leading edges by increasing the pinching effect on the membrane filtration assemblies, a weight can be placed on the final permeate transfer layer. The weight can be a static weight and thus no active guiding by using hands is needed.

According to a further embodiment of the first aspect, the final permeate transfer layer extend a shorter distance in the second direction than the other permeate transfer layers, such as substantially from the first leading edge to the final leading edge. The final permeate layer must not necessarily extend the full length of the other layers in the second direction as it is only used for guiding and pinching the leading edges during the rolling and it will be redundant during the actual use of the filtration module.

According to a further embodiment of the first aspect, the first permeate transfer layer define a cut out area substantially corresponding to the area of the final permeate transfer layer. To avoid having two adjacent permeate transfer layers in the final product, the first permeate transfer layer define a cut out area substantially corresponding to the area of the final permeate transfer layer in the filtration module. The final permeate transfer layer

The above object is realized according to a first aspect of the present invention by a spirally wound filtration module for filtrating a fluid feed into a retentate portion and a permeate portion, the spirally wound filtration module comprising:
a permeate tube extending substantially between a first end and a second end in a first direction, the permeate tube defining a plurality of perforations,
a first set of membrane filtration assemblies, each membrane filtration assembly defining a leading edge each and comprising: a first membrane layer, a feed transfer layer and a second membrane layer stacked on top of each other, and
a second set of permeate transfer layers, the membrane filtration assemblies and the permeate transfer layers being spirally wound around the permeate tube in a spiral direction being perpendicular to the first direction, each membrane filtration assembly being located between two permeate transfer layers starting with a first permeate transfer layer and ending with a final permeate transfer layer, the first permeate transfer layer being in contact with the permeate tube between the first end and the second end, the leading edges of the membrane filtration assemblies facing the permeate tube and being sequentially offset along the spiral direction, the final permeate transfer layer covering all the leading edges of the membrane filtration assemblies.

The method according to the first aspect can be used for producing the spirally wound filtration module according to the second aspect, and any of the embodiments of the method according to the first aspect will be equally applicable to the spirally wound filtration module according to the second aspect.

The above object is realized according to a third aspect of the present invention by a use of a spirally wound filtration module according to the second aspect in a filtration system. The spirally wound filtration module can be used in a filtration system for filtration of a feed into a concentrate and a permeate.

### Brief description of the drawings

FIG. 1A is a side view of the positioning of the permeate tube, the first permeate transfer layer and the first membrane filtration assembly.
FIG. 1B is a side view of the glueing of the first membrane filtration assembly.
FIG. 1C is a side view of the positioning of the second permeate transfer layer on the glued membrane filtration assembly.
FIG. 1D is a side view of the soaking of the second permeate transfer layer.
FIG. 1E is a side view of the positioning and glueing of the second membrane filtration assembly and positioning of the third permeate transfer layer.
FIG. 1F is a side view of the soaking of the third permeate transfer layer.
FIG. 1G 1E is a side view of the positioning and glueing of the final membrane filtration assembly and positioning of the final permeate transfer layer.
FIG. 1H is a side view of the glueing of the final permeate transfer layer and the membrane filtration assembly.
FIG. 1I is a side view of the membrane filtration assemblies and the permeate transfer layers around the permeate tube when forming the filtration module during rolling.
FIG. 1J is a perspective view of a membrane filtration module during rolling.
FIG. 2A is a perspective view of the insertion of the membrane filtration module into a filter housing.
FIG. 2B is a perspective view of the filter housing being closed by applying the lid.

### Detailed description of the drawings

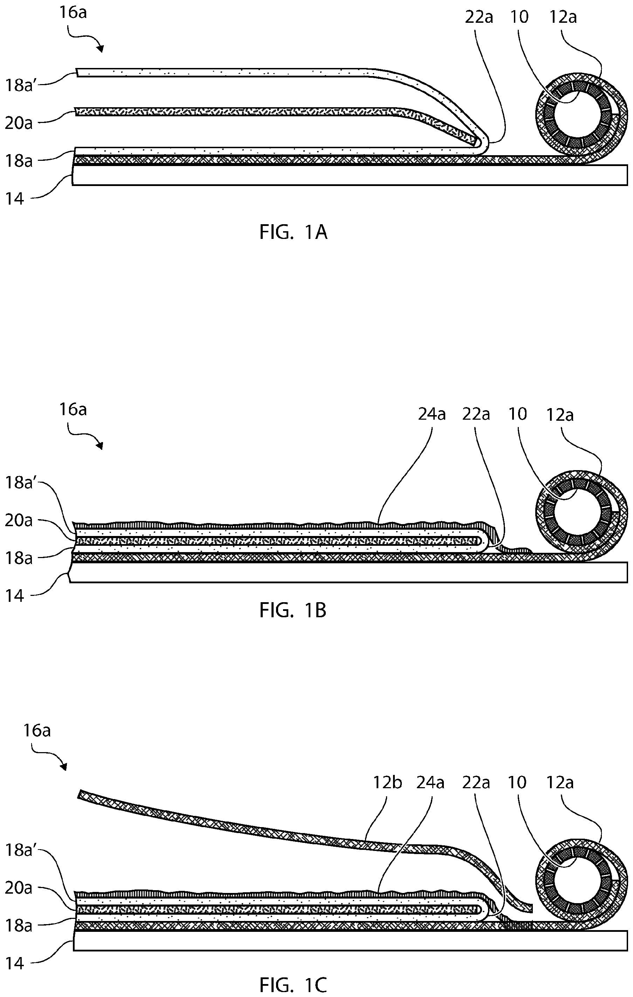

Fig. 1A is a side view of the positioning of a permeate tube 10, a first permeate transfer layer 12a and a first membrane filtration assembly 16a. The first permeate transfer layer 12a being located on a flat table 14 and is partially rolled up on the permeate tube 10. The first membrane filtration assembly 16a comprises a first membrane layer 18a in contact with the first permeate transfer layer 12a, a second membrane layer 18a' above the first membrane layer 18a and a first feed transfer layer 20a located between the first permeate transfer layer 18a and the second membrane layer 18a'. The first second membrane layer 18a and the second membrane layer 18a' are part of the same sheet that has been folded at a leading edge 22a of the membrane filtration assembly 16a. The leading edge 22a is located adjacent the permeate tube 10.

The permeate tube 10 has perforations for the permeate. The first permeate transfer layer 12a allows the permeate to flow freely and the first feed transfer layer 20a allows the feed to flow freely. They are typically made of net structures or grid structures. The membrane layers 18 18' are permeable for the permeate but not permeable for the retentate part of the feed.

Fig. 1B is a side view of the glueing of the first membrane filtration assembly 16a. Glue 24a is put onto the second membrane layer 18a' in a horseshoe shape along the edges of the first membrane filtration assembly 16a except along the leading edge 22a.

Fig. 1C is a side view of the positioning of the second permeate transfer layer 12b on the glued membrane filtration assembly 16a. The second permeate transfer layer 12b extend to a location between the leading edge 22a and the permeate tube 10, thereby overlapping the leading edge 22a.

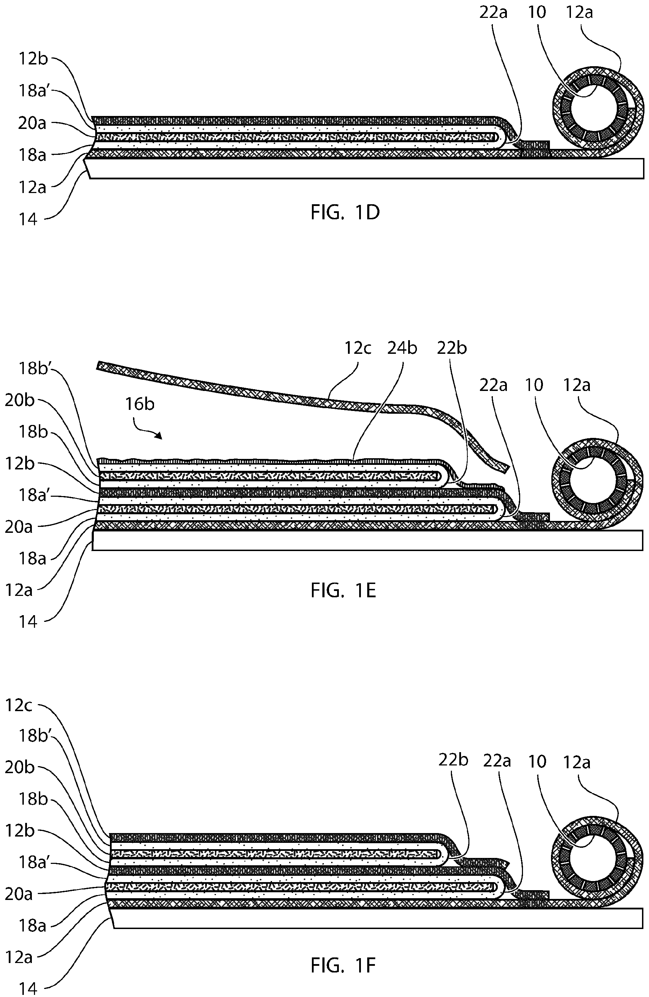

Fig. 1D is a side view of the soaking of the second permeate transfer layer 12b. The glue, visible here as a darker shade in the second permeate transfer layer 12b, will adhere the second membrane 18a' to the second permeate transfer layer 12b and seep into the second permeate transfer layer 12b.

Fig. 1E is a side view of the positioning and glueing of the second membrane filtration assembly 16b and positioning and glueing of the third permeate transfer layer 12c. The leading edge 22b of the second membrane filtration assembly 16b has been offset relative to the leading edge 22a of the first membrane filtration assembly 16a in a direction away from the permeate tube 10. The first membrane 18b of the second membrane filtration assembly 16b will adhere to the glued part of the second permeate transfer layer 12b of the first membrane filtration assembly 16a due to the glue seeping through the second permeate transfer layer 12b. The second permeate transfer layer 12b thus adheres to both the first membrane 18b of the second membrane filtration assembly 16b and the second membrane 18b' of the first membrane filtration assembly 16a. The glue, when hardened, also serves to separate the inside and the outside of the permeate transfer layer. Glue 24b is applied onto the second membrane 18b' of the first membrane filtration assembly 16a and the third permeate transfer layer 12c is positioned on the second membrane 18b' of the second membrane filtration assembly 16b. The third permeate transfer layer 12c extend to a location between the leading edge 22b of the second membrane filtration assembly 16b and the permeate tube 10, thereby overlapping the leading edge 22b of the second membrane filtration assembly 16b.

Fig. 1F is a side view of the soaking of the third permeate transfer layer 12c by the glue. The glue, visible here as a darker shade in the second permeate transfer layer 12b, will adhere the second membrane 18b' to the third permeate transfer layer 12c and seep into the second permeate transfer layer 12c.

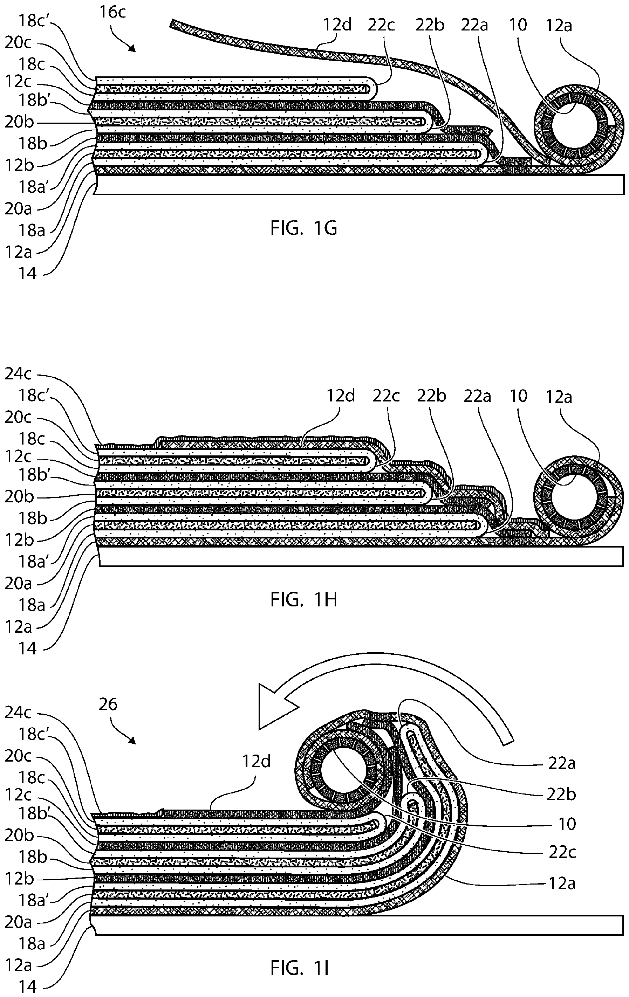

Fig. 1G is a side view of the positioning and glueing of the final membrane filtration assembly 16c and positioning of the final permeate transfer layer 12d. The leading edge 22c of the final membrane filtration assembly 16c has been offset relative to the leading edge 22b of the second membrane filtration assembly 16b in a direction away from the permeate tube 10. The first membrane 18c of the final membrane filtration assembly 16c will adhere to the glued part of the third permeate transfer layer 12c of the second membrane filtration assembly 16b due to the glue seeping through the third permeate transfer layer 12c. The third permeate transfer layer 12c thus adheres to both the first membrane 18c of the final membrane filtration assembly 16c and the second membrane 18c' of the second membrane filtration assembly 16b.

The final permeate transfer layer 12d overlaps all of the leading edges 22abc of the membrane filtration assemblies 16abc. However, the final permeate transfer layer 12d can be made shorter than the other permeate transfer layers as it will be adjacent to the first permeate transfer layer 12a in the filtration module. It can also be made thinner than the than the other permeate transfer layers.

Fig. 1H is a side view of the glueing of the final permeate transfer layer 12d and the final membrane filtration assembly 16c. Glue 24c is applied onto the side edges of the final permeate transfer layer 12d and the glue 24c extends onto the side edges of the final membrane filtration assembly 16c and the far edge opposite the leading edge of the second membrane 18c' on the final membrane filtration assembly 16c at the location where the shorter final permeate transfer layer 12d does not cover.

Fig. 1I is a side view of the membrane filtration assemblies and the permeate transfer layers around the permeate tube 10 when forming the filtration module during rolling. The second membrane 18c' of the final membrane filtration assembly 16c will adhere to the fourth permeate transfer layer 12d due to the glue seeping through the fourth permeate transfer layer 12d. During rolling the first permeate transfer layer 12a will adhere to final permeate transfer layer 12d and to the second membrane 18c' of the final membrane filtration assembly 16c at the locations where the final permeate transfer layer 12d does not cover.

The final permeate transfer layer 12d covering all the leading edges 22abc will keep a pressure onto the leading edges 22abc of the membrane filtration assemblies. This will guide and keep them in place during rolling and makes it unnecessary to use hands for guiding in close proximity to the position where opposite layers meet during rolling.

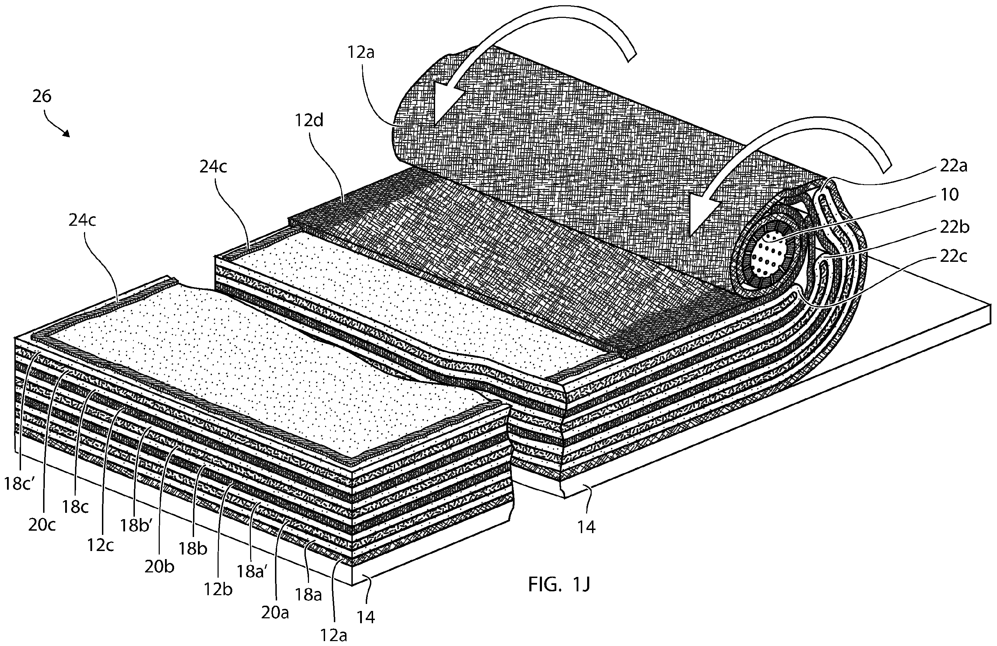

FIG. 1J is a perspective view of a membrane filtration module 26 during rolling. It corresponds to Fig. 1I. It can be observed that the glue 24c has seeped into the final permeate transfer layer 12d at the side edges and the glue 24c extends onto the final membrane filtration assembly 16c side edges the far edge opposite the leading edge of the second membrane 18c' on the final membrane filtration assembly 16c at the location where the shorter final permeate transfer layer 12d does not cover. The glue 24c forms a horseshoe shape.

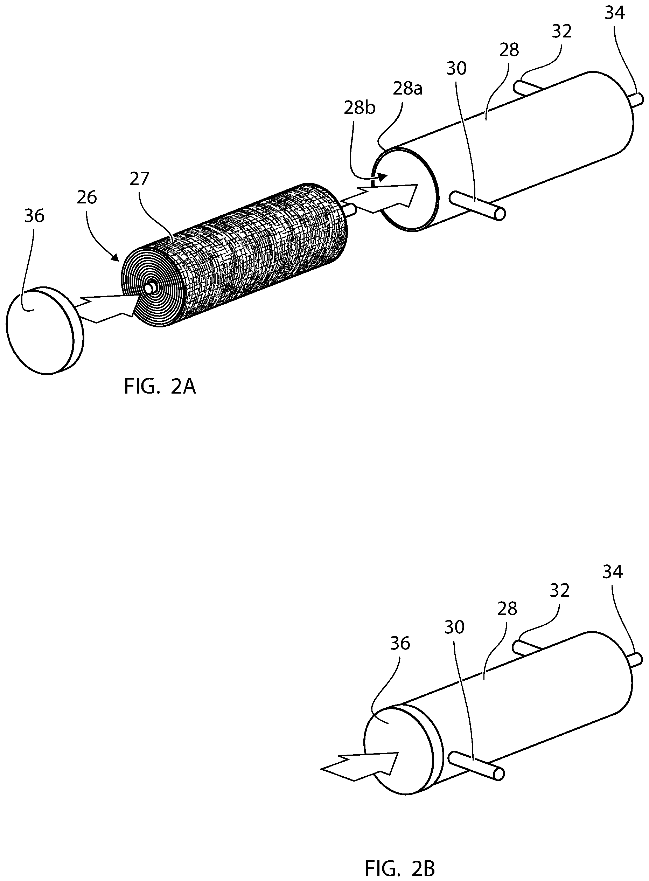

FIG. 2A is a perspective view of the insertion of the membrane filtration module 26 into a filter housing 28. The membrane filtration module 26 has been covered by a wrap 27 for easier handling. The substantially cylindrical filtration module 26 is inserted into the non-permeable filter housing 28 through an opening 28a. The opening 28a is circular and substantially corresponds to the circumference of the filter module 26. The filter housing 28 has an inner space 28b which substantially corresponds to the outer shape of the filtration module 26. The housing 28 has a feed flow inlet 30 and a feed flow outlet 32 located at opposite ends of the housing 28 and a permeate outlet 34 which is centrally located at one end of the housing 28. The opening 28a of the housing 28 is hermetically closed off by a lid 36.

FIG. 2B is a perspective view of the filter housing 28 being closed by applying the lid 36. The filter housing 28 is now ready for operation. Removal of the filtration module 26 is made by removing the lid 36 and pulling out the filtration module 26.

The thickness of the layers of the filtration module has been exaggerated in the above figures for better visibility. Only three membrane filtration assemblies are show here for simplicity, however, in practice more membrane filtration assemblies will be used, such as 6, 8 or 10 or more.

## Claims

1. A method of producing a spirally wound filtration module for filtrating a fluid feed into a retentate portion and a permeate portion, the method comprising the steps of:
providing a permeate tube extending in a first direction between a first end and a second end, the permeate tube defining a plurality of perforations,
providing a first set of membrane filtration assemblies, each membrane filtration assembly defining a leading edge each and comprising: a first membrane layer, a feed transfer layer and a second membrane layer stacked on top of each other,
providing a second set of permeate transfer layers,
stacking the membrane filtration assemblies and the permeate transfer layers on top of each other, each membrane filtration assembly being located between two permeate transfer layers starting with a first permeate transfer layer and ending with a final permeate transfer layer, the first permeate transfer layer being in contact with the permeate tube between the first end and the second end and extends away from the permeate tube in a second direction being perpendicular to the first direction, the leading edges of the membrane filtration assemblies facing the permeate tube and being sequentially offset along the second direction, the final permeate transfer layer covering all the leading edges of the membrane filtration assemblies, and
rolling the membrane filtration assemblies and the permeate transfer layers around the permeate tube forming the filtration module.

2. The method according to claim 1, wherein the first membrane layer and the second membrane layer constitute a single sheet folded about the feed transfer layer at the leading edge.

3. The method according to any of the preceding claims, wherein the total sequential offset between the leading edges of the membrane filtration assemblies along the second direction substantially correspond to the circumference of the permeate tube.

4. The method according to any of the preceding claims, wherein the first set is between 4-50 membrane filtration assemblies, preferably between 6-20 membrane filtration assemblies.

5. The method according to any of the preceding claims, wherein the number of permeate transfer layers are one more than the number of membrane filtration assemblies.

6. The method according to any of the preceding claims, wherein the filtration modules is wrapped by a grid material.

7. The method according to any of the preceding claims, wherein the permeate transfer layers and the feed transfer layers are in the form of nets or meshes.

8. The method according to any of the preceding claims, wherein the permeate transfer layers being glued to the adjacent membrane layers.

9. The method according to claim 8, wherein the permeate transfer layers being glued to the adjacent membrane layers along all edges except the leading edge.

10. The method according to any of the preceding claims, wherein a weight is placed on the final permeate transfer layer during rolling.

11. The method according to any of the preceding claims, wherein the final permeate transfer layer extend a shorter distance in the second direction than the other permeate transfer layers, such as substantially from the first leading edge to the final leading edge.

12. The method according to any of the preceding claims, wherein the first permeate transfer layer define a cut out area substantially corresponding to the area of the final permeate transfer layer in the filtration module.

13. A spirally wound filtration module for filtrating a fluid feed into a retentate portion and a permeate portion, the spirally wound filtration module comprising:
a permeate tube extending substantially between a first end and a second end in a first direction, the permeate tube defining a plurality of perforations,
a first set of membrane filtration assemblies, each membrane filtration assembly defining a leading edge each and comprising: a first membrane layer, a feed transfer layer and a second membrane layer stacked on top of each other, and
a second set of permeate transfer layers, the membrane filtration assemblies and the permeate transfer layers being spirally wound around the permeate tube in a spiral direction being perpendicular to the first direction, each membrane filtration assembly being located between two permeate transfer layers starting with a first permeate transfer layer and ending with a final permeate transfer layer, the first permeate transfer layer being in contact with the permeate tube between the first end and the second end, the leading edges of the membrane filtration assemblies facing the permeate tube and being sequentially offset along the spiral direction, the final permeate transfer layer covering all the leading edges of the membrane filtration assemblies.

14. The spirally wound filtration module according to claim 13, further comprising any of the features according to any of the claims 2-12.

15. Use of a spirally wound filtration module according to claim 13 or 14 in a filtration system.
